# EUROPÄISCHE PATENTANMELDUNG

(11) **EP 3 697 020 A1**
(43) Veröffentlichungstag der Anmeldung: **19.08.2020**
(21) Anmeldenummer: 19157373.2
(22) Anmeldetag: 15.02.2019
(51) Int. Cl.: H04L 9/06

(54) **VERFAHREN ZUM BETREIBEN VON IM ZÄHLER-MODUS BETRIEBENEN SCHLÜSSELSTROMGENERATOREN ZUR SICHEREN DATENÜBERTRAGUNG, SCHLÜSSELSTROMGENERATOR MIT ZÄHLER-MODUS-BETRIEB ZUR SICHEREN DATENÜBERTRAGUNG UND COMPUTER-PROGRAMM-PRODUKT ZUR SCHLÜSSELSTROMERZEUGUNG**

(71) Anmelder: Siemens Aktiengesellschaft, 80333 München (DE)
(72) Erfinder: Aschauer, Hans, 81829 München (DE); Aydos, Gökçe, 81549 München (DE); Heintel, Markus, 81377 München (DE); Zwanzger, Johannes, 85579 Neubiberg (DE)

(57) **Zusammenfassung**

Um im Zähler-Modus betriebene Schlüsselstromgeneratoren zur sicheren Datenübertragung gegen eine wiederholte oder missbräuchliche Erzeugung eines bereits generierten Schlüsselstroms zu schützen und die Datenübertragung gegen eine wiederholte Nutzung eines Schlüsselstroms, ein sogenanntes Reuse, zu schützen, wird es vorgeschlagen, den Schlüsselstromgenerator (SSG) bezüglich Realisierungsoptionen wahlweise in einer von zwei Betriebsarten, einer Betriebsart "Verschlüsselung" und einer Betriebsart "Entschlüsselung", zu betreiben, bei dem in der Betriebsart "Verschlüsselung" ein aufgrund eines ersten Steuerdatensatzes (SDS1) erzeugter Schlüsselstrom (SST_{VS}) zur Verschlüsselung von Daten (DT), insbesondere Nutzdaten (NDT), zu einem Chiffrat (CHF), dem Erzeugnis von chiffrierten Daten bzw. Nutzdaten, verwendet wird und bei dem in der Betriebsart "Entschlüsselung" ein aufgrund eines zweiten Steuerdatensatzes (SDS2) erzeugter Schlüsselstrom (SST_{ES}) zur Entschlüsselung des Chiffrats (CHF) verwendet wird, wobei der Schlüsselstrom (SST_{VS}, SST_{ES}) nur ausgegeben wird, wenn die Erzeugung des Schlüsselstroms (SST_{VS}, SST_{ES}) aus der Verschlüsselung eines Zählerwertes des im Zähler-Modus betriebenen Schlüsselstromgenerators (SSG) mit einem Blockchiffre-Schlüssel (BCS) fehlerfrei ist.

## Beschreibung

Die Erfindung bezieht sich auf ein Verfahren zum Betreiben von im Zähler-Modus betriebenen Schlüsselstromgeneratoren zur sicheren Datenübertragung gemäß dem Oberbegriff des Patentanspruches 1, einen Schlüsselstromgenerator mit Zähler-Modus-Betrieb zur sicheren Datenübertragung gemäß dem Oberbegriff des Patentanspruches 15 und ein Computer-Programm-Produkt zur Schlüsselstromerzeugung gemäß dem Oberbegriff des Patentanspruches 18.

Aus der EP 3 422 657 A1 ist ein System und Verfahren zur Aufteilung und Synchronisation von Kryptofunktionalität, z.B. Verschlüsselung, kryptographischer Integritätsschutz, mit den hierfür notwendigen Protokollanpassungen innerhalb eines modular aufgebauten Geräts zur kryptographischen Verarbeitung von Netzverkehr bekannt. Ziel der Aufteilung ist es, den Informationsaustausch auf das absolut notwendige Minimum zu beschränken. Keine Komponente soll Zugriff auf Daten erhalten, die nicht zur Erledigung der komponentenspezifischen Aufgabe benötigt werden. Dadurch wird das erforderliche Vertrauen in die einzelnen Komponenten verringert, z.B. durch nicht vertrauenswürdige, insbesondere manipulierte, Komponenten. Diese Modularisierung kann zur Verteilung der Aufgaben zwischen einem Steuerungsgrundgerät und einem Sicherheitsmodul verwendet werden.

Dabei wird die kryptographische Verarbeitung selbst weiter unterteilt. Gemäß dieser Unterteilung soll eine erste kryptographische Verarbeitungseinheit auf dem Sicherheitsmodul einen Schlüsselstrom zur Verfügung stellen und eine zweite kryptographische Verarbeitungseinheit Nutzdaten mit dem Schlüsselstrom zusammenführen. Die Parametrisierung, z.B. Wahl von Schlüssel und Initialisierungsvektor, der ersten kryptographischen Verarbeitungseinheit erfolgt Tag-gesteuert mit Hilfe eines Tags.

Hierbei kann es zudem sinnvoll sein, eine Controller-Funktionalität auf dem Steuerungsgrundgerät ebenfalls zu unterteilen. Ein erster Controller übernimmt die Klassifizierung der Nutzdaten, während ein zweiter Controller die kryptographische Verarbeitung und die Nachbearbeitung durchführt. Die erste kryptographische Verarbeitungseinheit sieht in dieser Variante lediglich den Tag und hat keinen Zugriff auf die Nutzdaten. Das bietet Vorteile in Bezug auf Vertrauenswürdigkeit und es reduziert die Bandbreite der Schnittstelle zwischen dem Steuerungsgrundgerät und dem Sicherheitsmodul, weil die Nutzdaten nicht ans Sicherheitsmodul übergeben werden müssen.

Bei der Generierung des Schlüsselstroms wird ein Schlüsselstromgenerator verwendet, der auf einer symmetrischen Blockchiffre basiert und im sogenannten Counter-Mode betrieben wird. Dabei wird ein fortlaufender Zähler (Counter) mit der Blockchiffre verschlüsselt. Das Ergebnis ist der vom verwendeten Blockchiffren-Schlüssel abhängige, pseudozufällige Schlüsselstrom. Dieser Schlüsselstrom wird anschließend mit den Nutzdaten verknüpft, sodass ein Chiffrat entsteht. Damit der generierte Schlüsselstrom sicher verwendet werden kann, ist es wesentlich, dass jeder Zählerwert nur genau einmal verwendet wird, um einen Schlüsselstrom für die Verschlüsselung von Nutzdaten zu erzeugen.

Beim Counter-Mode wird der Initialwert des Counters normalerweise als Initialisierungsvektor vorgeben. Bei dem in der EP 3 422 657 A1 beschriebenen System und Verfahren zur Aufteilung und Synchronisation von Krypto-Funktionalität besteht ein möglicher Angriff darin, dass mehrfach derselbe Initialisierungsvektor übergeben wird bzw. der Initialisierungsvektor so gewählt wird, dass es im Betrieb zur doppelten Verwendung des Zählers kommt.

Eine solche Attacke ist in anderen Systemen als dem aus der EP 3 422 657 A1 bekannten System nicht zu erwarten, weil in diesen anderen Systemen im Unterschied zu dem aus der EP 3 422 657 A1 bekannten System, wo die Verschlüsselungslogik in mehrere (zwei) Vertrauenszonen unterteilt ist, die komplette Verschlüsselungslogik in einer einzigen, nicht unterteilten Vertrauenszone stattfindet.

Die der Erfindung zugrundeliegende Aufgabe besteht darin, ein Verfahren zum Betreiben von im Zähler-Modus betriebenen Schlüsselstromgeneratoren zur sicheren Datenübertragung, einen Schlüsselstromgenerator mit Zähler-Modus-Betrieb zur sicheren Datenübertragung und ein Computer-Programm-Produkt zur Schlüsselstromerzeugung anzugeben, bei dem der Schlüsselstromgenerator gegen eine wiederholte oder missbräuchliche Erzeugung eines bereits generierten Schlüsselstroms geschützt ist und die Datenübertragung gegen eine wiederholte Nutzung eines Schlüsselstroms, ein sogenanntes Re-use, geschützt wird.

Diese Aufgabe wird ausgehend von dem im Oberbegriff des Patentanspruches 1 definierten Verfahren durch die im Kennzeichen angegebenen Verfahrensmerkmale gelöst.

Darüber hinaus wird diese Aufgabe ausgehend von dem im Oberbegriff des Patentanspruches 15 definierten Server durch die im Kennzeichen angegebenen Servermerkmale gelöst.

Außerdem wird diese Aufgabe ausgehend von dem im Oberbegriff des Patentanspruches 18 definierten Computer-Programm-Produkt zur Schlüsselstromerzeugung durch die im Kennzeichen erfolgte Bezugnahme auf Verfahrensmerkmale gemäß einem der Ansprüche 1 bis 14 gelöst.

Die der Erfindung zugrundeliegende Idee gemäß der in den Ansprüchen 1, 15 und 18 jeweils angegebenen technischen Lehre besteht darin, zur sicheren Datenübertragung einen Schlüsselstromgenerator im Zähler-Modus und bezüglich Realisierungsoptionen wahlweise in einer von zwei Betriebsarten, einer Betriebsart "Verschlüsselung" und einer Betriebsart "Entschlüsselung", zu betreiben, bei dem in der Betriebsart "Verschlüsselung" ein aufgrund eines ersten Steuerdatensatzes erzeugter Schlüsselstrom zur Verschlüsselung von Daten, insbesondere Nutzdaten, zu einem Chiffrat, dem Erzeugnis von chiffrierten Daten bzw. Nutzdaten, verwendet wird und bei dem in der Betriebsart "Entschlüsselung" ein aufgrund eines zweiten Steuerdatensatzes erzeugter Schlüsselstrom zur Entschlüsselung des Chiffrats verwendet wird, wobei der Schlüsselstrom nur ausgegeben wird, wenn die Erzeugung des Schlüsselstroms aus der Verschlüsselung eines Zählerwertes des im Zähler-Modus betriebenen Schlüsselstromgenerators mit einem Blockchiffre-Schlüssel fehlerfrei ist.

Unter dem Begriff "Verschlüsselung" bei der Betriebsart "Verschlüsselung" wird im Sinne der vorliegenden Erfindung/Anmeldung die Verschlüsselung und/oder Authentifizierung von Daten bzw. Nutzdaten verstanden, wobei demzufolge in der Betriebsart "Verschlüsselung" ein Schlüsselstrom zur Verschlüsselung und/oder Authentifizierung von Daten bzw. Nutzdaten erzeugt wird.

Unter dem Begriff "Entschlüsselung" bei der Betriebsart "Entschlüsselung" wird im Sinne der vorliegenden Erfindung/Anmeldung die Entschlüsselung, Authentifikation und/oder Verifikation von Daten bzw. Nutzdaten verstanden, wobei demzufolge in der Betriebsart "Verschlüsselung" ein Schlüsselstrom zur Entschlüsselung, Authentifikation und/oder Verifikation von Daten bzw. Nutzdaten erzeugt wird.

Die Bildung des Schlüsselstroms erfolgt derart, dass der Schlüsselstrom aus der Verschlüsselung des fortlaufend, in Form von steuerdatensatzbezogenen Aufrufen des Schlüsselstromgenerators ermittelten, initial durch einen in dem Steuerdatensatz enthaltenen Initialisierungsvektor mit IV=i₁ gegebenen, in einem begrenzten Zähler-Wertebereich, z.B. in der Größenordnung von größer als 2³², liegenden Zählerwertes mit dem Blockchiffre-Schlüssel gebildet wird.

Die Tatsache, dass es im Allgemeinen nicht effizient ist, alle bereits verwendeten Zählerstände eines Zählers im Schlüsselstromgenerator festzuhalten, weil der Wertebereich des Zählers typischerweise in der Größenordnung von größer gleich 2³² liegt, war der Ausgangspunkt für Überlegungen in Richtung der der Erfindung zugrundeliegenden Idee.

Bei diesem erfindungsgemäßen Szenario zur sicheren Datenkommunikation und zur fehlerfreien Generierung des Schlüsselstroms werden in der Betriebsart "Verschlüsselung" des Schlüsselstromgenerators die sequentielle Verwendung der Zählerwerte protokolliert und durch die Protokollierung erkannt, ob der Blockchiffre-Schlüssel mit demselben Zählerwert fehlerhaft verwendet worden ist. Fehlerhaft verwendet kann dabei bedeuten, dass der Blockchiffre-Schlüssel mit demselben Zählerwert mehrfach oder sequentiell-mehrfach, sprich mehrmals hintereinander verwendet worden ist. Die Protokollierung findet gemäß Anspruch 15 in einem Protokollspeicher-Modul eines Schlüsselstrombildung-Moduls des Schlüsselstromgenerators statt und das Erkennen infolge der Protokollierung, ob der Blockchiffre-Schlüssel mit demselben Zählerwert fehlerhaft verwendet worden ist, passiert gemäß Anspruch 15 in einem Prüf-Erkennung-Modul des Schlüsselstrombildung-Moduls in dem Schlüsselstromgenerator.

Liefert dieses Erkennen in dem Prüf-Erkennung-Modul aufgrund der protokollierten Zählerwerte, dass es zu einer fehlerhaften Verwendung gekommen ist, so wird daraufhin eine Fehlermeldung oder kein Schlüsselstrom von dem Schlüsselstromgenerator ausgegeben.

Hat hingegen eine fehlerlose Verwendung stattgefunden, so wird von dem Schlüsselstromgenerator der Schlüsselstrom für die Verschlüsselung der Daten ausgegeben.

Darüber hinaus wird im Fall der fehlerlosen Verwendung für eine Validitätsprüfung in der Betriebsart "Entschlüsselung" ein Prüfcode generiert, der für die Betriebsart "Verschlüsselung" an ein Geheimnis gebunden ist. Das Geheimnis wird in dem Schlüsselstromgenerator gemäß Anspruch 15 in einem Geheimnis-Modul des Schlüsselstrombildung-Moduls entweder erzeugt oder in den Schlüsselstromgenerator von außen eingebracht und dann in dem Geheimnis-Modul abgelegt. Das Geheimnis wird benötigt, um den Prüfcode zu erzeugen (in der Betriebsart "Verschlüsselung") und zu validieren (in der Betriebsart "Entschlüsselung"). So kann das Geheimnis z.B. über eine Ableitungsfunktion aus dem Blockchiffre-Schlüssel erzeugt werden. Im einfachsten Fall wird das Geheimnis jedoch identisch dem Blockchiffre-Schlüssel gewählt.

Da das Geheimnis für einige Ausführungsformen, z.B. bei einem symmetrischen "Message Authentication Code <MAC>", in beiden Geheimnis-Modulen (für die Betriebsart "Verschlüsselung"/ für die Betriebsart "Entschlüsselung") gleich sein muss, wird es bevorzugt von außen eingebracht.

In der Betriebsart "Entschlüsselung" des Schlüsselstromgenerators wird bei dem Szenario zur sicheren Datenkommunikation und zur fehlerfreien Generierung des Schlüsselstroms die fehlerhafte, insbesondere die mehrfache oder sequentiell-mehrfache Verwendung der Blockchiffre-Schlüssel und Zählerwerte aufgrund des generierten Prüfcodes als den zweiten Steuerdatensatz im Zuge einer auf der Basis des Geheimnisses durchgeführten Validitätsprüfung des Prüfcodes erkannt, ob der Blockchiffre-Schlüssel mit demselben Zählerwert fehlerhaft verwendet worden ist. Fehlerhaft verwendet kann dabei wiederum bedeuten, dass der Blockchiffre-Schlüssel mit demselben Zählerwert mehrfach oder sequentiell-mehrfach, sprich mehrmals hintereinander verwendet worden ist. Die Validitätsprüfung passiert dabei gemäß Anspruch 15 auch in dem Prüf-Erkennung-Modul des Schlüsselstrombildung-Moduls in dem Schlüsselstromgenerator. Im Zuge dieser Validitätsprüfung wird erkannt, ob der generierte, den zweiten Steuerdatensatz repräsentierende Prüfcode valide ist.

Führt diese Prüfcode-Validitätsprüfung in dem Prüf-Erkennung-Modul zu einem negativen Ergebnis, was bedeutet, dass der den zweiten Steuerdatensatz repräsentierende Prüfcode inkorrekt ist, so wird daraufhin eine weitere Fehlermeldung oder kein Schlüsselstrom von dem Schlüsselstromgenerator ausgegeben.

Ist jedoch das Ergebnis der Prüfcode-Validitätsprüfung in dem Vergleich-Erkennung-Modul positiv, was bedeutet, dass der den zweiten Steuerdatensatz repräsentierende Prüfcode korrekt ist, so wird daraufhin von dem Schlüsselstromgenerator der Schlüsselstrom zur Entschlüsselung des Chiffrats ausgebeben.

Die Validität des Prüfcodes wird dabei vorzugsweise derart geprüft, dass in der Betriebsart "Entschlüsselung" auf der Basis des Geheimnisses ein weiterer Prüfcode erzeugt wird und dieser weitere Prüfcode mit dem in der Betriebsart "Verschlüsselung" generierten Prüfcode auf Übereinstimmung verglichen wird (vgl. Ansprüche 2 und 16).

Der Prüfcode wird benutzt, um den Initialisierungsvektorbasierten Zählerwert zu schützen, und er ist zur Authentisierung des Initialisierungsvektors vorzugsweise eine asymmetrische Signatur oder ein symmetrischer "Message Authentication Code <MAC>" (vgl. Ansprüche 3, 4 und 17).

Zur Erhöhung der Sicherheit, insbesondere gegenüber Replay-Angriffen, können neben dem Initialisierungsvektor weitere Hilfsdaten, z.B. Generationszähler und/oder ein Nonce, ein digitaler Fingerabdruck von dem Blockchiffre-Schlüssel, in den Prüfcode bzw. der "Message Authentication Code <MAC>" oder die asymmetrischen Signatur eingehen.

Der Initialisierungsvektor in der Betriebsart "Verschlüsselung" kann dabei gemäß Ansprüchen 11 und 17 nicht nur von außen vorgegeben sein, sondern auch vom Schlüsselstromgenerator automatisch gewählt oder vorgegeben werden.

In der Betriebsart "Entschlüsselung" wird der Initialisierungsvektor zusammen mit dem Prüfcode bzw. dem "Message Authentication Code <MAC>" oder der asymmetrischen Signatur verfügbar gemacht.

In der Betriebsart "Verschlüsselung" (vgl. Ansprüche 5, 6 und 16), wird festgelegt, dass der Zähler in dem Schlüsselstromgenerator streng monoton steigt. Das heißt: Wird beim ersten Aufruf des Schlüsselstromgenerators als erster Steuerungsdatensatz der Initialisierungsvektor mit IV=i₁ übergeben und für die Schlüsselstromgenerierung "n" Zählerwerte verbraucht, so muss beim nächsten Aufruf der Initialisierungsvektor mit IV=i₃ mit i₃≥i₂=i₁+n gewählt oder eingegeben (übergeben) werden. Zur Überprüfung muss im Schlüsselstromgenerator nur der nächste verwendbare Zählerstand i₂=i₁+n gespeichert werden. Der übergebene Initialisierungsvektor mit IV=i₃ wird dann jeweils mit dem gespeicherten Zählerstand verglichen und abhängig vom Vergleich entweder ein Schlüsselstrom oder eine Fehlermeldung ausgegeben. Nach einer Aktualisierung des Blockchiffre-Schlüssels wird der Wert i auf 0 zurückgesetzt. Dies ist dann erforderlich, wenn die (nicht sequentielle) mehrfache Verwendung des Blockchiffre-Schlüssels außerhalb der beschriebenen Vorgehensweise ausgeschlossen werden muss.

In der Betriebsart "Entschlüsselung" kann nicht vorausgesetzt werden, dass der Zähler des Schlüsselstromgenerators bei regulärem Betrieb immer monoton steigt. So kann es beispielsweise beim Austausch verschlüsselter Daten über ein Netzwerk dazu kommen, dass verschiedene Netzwerkdatenpakete nicht in ihrer ursprünglichen Reihenfolge ausgeliefert werden. Dennoch soll sichergestellt werden, dass der Schlüsselstromgenerator in der Betriebsart "Entschlüsselung" nicht beliebige vom Angreifer gewählte Initialisierungsvektoren akzeptiert. Dazu wird vom Schlüsselstromgenerator in der Betriebsart "Verschlüsselung" als zweiter Steuerungsdatensatz der mit dem Prüfcode bzw. dem "Message Authentication Code <MAC>" oder der asymmetrischen Signatur geschützte Stand des verwendeten Initialisierungsvektors übergeben. Der Schlüsselstromgenerator in der Betriebsart "Entschlüsselung" akzeptiert nur Initialisierungsvektoren, wenn der Prüfcode bzw. der "Message Authentication Code <MAC>" oder die asymmetrische Signatur korrekt ist (vgl. Ansprüche 1 und 15).

Wird eine fehlerhafte, z.B. doppelte oder mehrfache, Verwendung des Initialisierungsvektors festgestellt, reagiert der Schlüsselstromgenerator in geeigneter Weise auf den Fehler. Folgende Fehlerreaktionen sind vorzugsweise denkbar:
- Anzeigen/Setzen eines Fehlerzustands, z.B. Fehlerbit als Ausgang (vgl. Ansprüche 7 und 16).
- Verhinderung der Ausgabe eines Schlüsselstroms, insbesondere bevorzugt in der Betriebsart "Entschlüsselung" (vgl. Ansprüche 8 und 16).
- Ausgabe eines ungültigen Schlüsselstroms, insbesondere bevorzugt in der Betriebsart "Verschlüsselung" (vgl. Ansprüche 9 und 16). Zur Erzeugung des ungültigen Schlüsselstroms kann ein zufällig gewählter Blockchiffre-Schlüssel oder ein aus dem Blockchiffre-Schlüssel mittels einer beliebigen Funktion abgeleiteter Blockchiffre-Schlüssel gewählt werden (vgl. Ansprüche 10 und 16).

Die Wahl der Betriebsart kann in vorteilhafter Weise wie folgt erfolgen (vgl. Ansprüche 12, 13 und 17):
- Dynamische, explizite Wahl: Der Schlüsselstromgenerator kann von außen dynamisch konfiguriert werden, so z.B. durch eine Konfigurations-PIN oder ein Konfigurationskommando (vgl. Ansprüche 12 und 17).
- Statische Wahl: Die Hardware des Schlüsselstromgenerators ist auf eine der beiden Betriebsarten festgelegt. Dies kann direkt in der Produktion oder nachträglich, z.B. durch Setzen einer Sicherung, geschehen (vgl. Ansprüche 12 und 17).
- Automatische Wahl: Dies geschieht durch den ersten Steuerdatensatz, d.h. der eingegebene Datensatz enthält keine Zusatzinformation bzw. "Message Authentication Code <MAC>"-Information, wodurch die Betriebsart "Verschlüsselung" ausgewählt ist (vgl. Ansprüche 13 und 17).
- Automatische Wahl: Dies geschieht durch den zweiten Steuerdatensatz, d.h. der eingegebene Datensatz enthält eine Zusatzinformation bzw. "Message Authentication Code <MAC>"-Information, wodurch Betriebsart "Entschlüsselung" ausgewählt ist (vgl. Ansprüche 13 und 17).

Der Schlüsselstromgenerator kann darüber hinaus so ausgelegt werden, dass die Betriebsart nach der erstmaligen Wahl für einen Kontext, z.B. Verfügbarkeit/Verwendung eines bestehenden oder bestimmten Blockchiffre-Schlüssels für die gesamte Lebensdauer des Schlüsselstromgenerators, nicht mehr geändert werden kann (vgl. Ansprüche 14 und 17).

Die Schlüsselstromerzeugung kann zudem bevorzugt in einem Computer-Programm-Produkt mit einem nicht-flüchtigen, lesbaren Speicher, in dem prozessorlesbare Steuerprogrammbefehle eines die Schlüsselstromerzeugung durchführenden Programm-Moduls gespeichert sind, und einem mit dem Speicher verbundenen Prozessor, der die Steuerprogrammbefehle des Programm-Moduls zur Schlüsselstromerzeugung ausführt, erfolgen, bei dem das Computer-Programm-Produkt hierfür die vorstehend erläuterten und dargelegten technischen Maßnahmen, insbesondere aber das Verfahren nach einem der Ansprüche 1 bis 14, ausführt.

Weitere Vorteile der Erfindung ergeben sich aus der nachfolgenden Beschreibung eines Ausführungsbeispieles der Erfindung anhand der FIGUR erläutert. Diese zeigt:

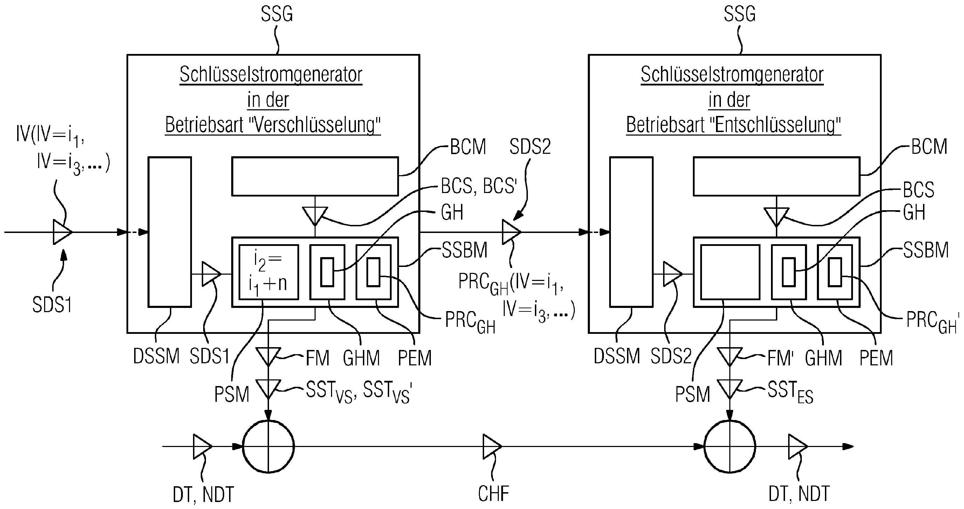

FIGUR 1 eine Schlüsselstromgenerator-Anordnung mit einem Schlüsselstromgenerator in einer Betriebsart "Verschlüsselung" und einen Schlüsselstromgenerator in einer Betriebsart "Entschlüsselung".

FIGUR zeigt eine Schlüsselstromgenerator-Anordnung, die zur sicheren Datenübertragung einen im Zähler-Modus betriebenen Schlüsselstromgenerator SSG in einer Betriebsart "Verschlüsselung" und einen im Zähler-Modus betriebenen Schlüsselstromgenerator SSG in einer Betriebsart "Entschlüsselung" aufweist. Für diese sichere Datenübertragung werden zu übertragende Daten DT, die z.B. in der Form Nutzdaten NDT, vorliegen, zunächst zur Verschlüsselung mit einem erzeugten Schlüsselstrom SST_{VS} zu einem Chiffrat CHF verschlüsselt und anschließend die Daten DT, NDT in dem Chiffrat CHF zur Entschlüsselung mit einem erzeugten Schlüsselstrom SST_{ES} entschlüsselt.

Die beiden Schlüsselstromgeneratoren SSG sind, was die Schlüsselstromgenerator-Infrastruktur anbetrifft, identisch aufgebaut. So enthält jeder im Zähler-Modus betriebene Schlüsselstromgenerator SSG der dargestellten Schlüsselstromgenerator-Anordnung eine Datensatz-Schnittstelle-Modul DSSM, ein Blockchiffre-Modul BCM und ein Schlüsselstrombildung-Modul SSBM, die miteinander verbunden sind und wahlweise entweder für die Erzeugung des Schlüsselstroms SST_{VS} zur Datenverschlüsselung oder des Schlüsselstroms SST_{ES} zur Datenentschlüsselung jeweils eine gemeinsame Funktionseinheit bilden. Der Schlüsselstrom SST_{VS} wird in dem Schlüsselstromgenerator SSG in der Betriebsart "Verschlüsselung" aufgrund eines ersten Steuerdatensatzes SDS1 erzeugt, der über das Datensatz-Schnittstelle-Modul DSSM dem Schlüsselstrombildung-Modul SSBM zugeführt wird. Der Schlüsselstrom SST_{ES} hingegen wird in dem Schlüsselstromgenerator SSG in der Betriebsart "Entschlüsselung" aufgrund eines zweiten Steuerdatensatzes SDS2 erzeugt, der auch über das Datensatz-Schnittstelle-Modul DSSM dem Schlüsselstrombildung-Modul SSBM zugeführt wird (vgl. Ausführungen zum Schlüsselstromgenerator SSG in der Betriebsart "Entschlüsselung" weiter unten).

Weiterhin wird dem Schlüsselstrombildung-Modul SSBM von dem Blockchiffre-Modul BCM noch ein Blockchiffre-Schlüssel BCS zugeführt. Auf der Basis des zugeführten Steuerdatensatz SDS1, SDS2 und dem Blockchiffre-Schlüssel BCS wird in der vorstehend beschriebenen, ausgestalteten Funktionseinheit der Schlüsselstrom SST_{VS}, SST_{ES} gebildet. Diese Schlüsselstrombildung erfolgt aus der Verschlüsselung eines fortlaufend, in Form von steuerdatensatzbezogenen Aufrufen i₁, i₃,... des Schlüsselstromgenerators SSG ermittelten, initial durch einen in dem Steuerdatensatz SDS1, SDS2 enthaltenen Initialisierungsvektor IV mit IV=i₁ gegebenen, in einem begrenzten Zähler-Wertebereich liegenden Zählerwertes mit dem Blockchiffre-Schlüssel BCS.

Die vorstehend beschriebene, gebildete Funktionseinheit erstreckt sich bezüglich des Schlüsselstrombildung-Moduls SSBM weiterhin noch auf ein Protokollspeicher-Modul PSM, ein Geheimnis-Modul GHM und ein Prüf-Erkennung-Modul PEM, die im Zuge der von dem Schlüsselstrombildung-Modul SSBM gebildeten Funktionseinheit allesamt in dem Schlüsselstrombildung-Modul SSBM enthalten sind und miteinander funktional zusammenwirken. Das Schlüsselstrombildung-Modul SSBM mit den genannten, darin enthaltenen Modulen ist von der Art des funktionalen Zusammenwirkens der Module und der Beschaffenheit vorzugsweise als ein Computer-Programm-Produkt zur Schlüsselstromerzeugung mit einem nicht-flüchtigen, lesbaren Speicher, in dem prozessorlesbare Steuerprogrammbefehle eines die Schlüsselstromerzeugung durchführenden Programm-Moduls gespeichert sind, und einem mit dem Speicher verbundenen Prozessor, der die Steuerprogrammbefehle des Programm-Moduls zur Schlüsselstromerzeugung ausführt, ausgebildet.

Bei der dargestellten Schlüsselstromgenerator-Anordnung ist in dem Schlüsselstromgenerator SSG, der sich in der Betriebsart "Verschlüsselung" befindet, beim ersten Aufruf i₁ des im Zähler-Modus betriebenen Schlüsselstromgenerators SSG, mit dem dieser sich in einem ersten Betriebszählzyklus i₁ befindet, ein Initialisierungsvektor IV mit IV=i₁ als den ersten Steuerdatensatz SDS1 gegeben. Gegeben kann dabei bedeuten, dass der Initialisierungsvektor IV entweder von dem Schlüsselstromgenerator SSG in der Betriebsart "Verschlüsselung" automatisch vorgegeben wird oder aber - wie es in der FIGUR dargestellt ist - dem Schlüsselstromgenerator SSG von außen zugeführt wird.

Bei einer der sich daran anschließenden Schlüsselstromgenerierung, bei dem sich der Schlüsselstromgenerator SSG in einem zweiten Betriebszählzyklus i₂ befindet, werden "n" Zählerwerte aus dem Zähler-Wertebereich bis zu einem Zählerstand i₂=i₁+n verbraucht. Dieser Zählerstand i₂=i₁+n wird zur Protokollierung in dem Protokollspeicher-Modul PSM gespeichert.

Beim nachfolgenden zweiten Aufruf i₃ des im Zähler-Modus betriebenen Schlüsselstromgenerators SSG, mit dem dieser sich in einem zweiten Betriebszählzyklus i₃ befindet, gibt es jetzt wieder die beiden Optionen. Entweder wählt der Schlüsselstromgenerator SSG einen weiteren Initialisierungsvektor IV mit i₃≥i₂=i₁+n als weiteren ersten Steuerdatensatz SDS1 oder es werden, alternativ zur der Wahl, von außen wieder ein weiterer Initialisierungsvektor IV mit IV=i₃ als weiterem ersten Steuerdatensatz SDS1 eingegeben und der beim zweiten Aufruf i₃ eingegebene weitere Initialisierungsvektor IV mit dem gespeicherten Zählerstand hinsichtlich einer zu erfüllenden Initialisierungsvektor-Zählerstand-Bedingung i₃≥i₂=i₁+n verglichen. Dieser Vergleich findet in dem Prüf-Erkennung-Modul PEM des Schlüsselstrombildung-Moduls SSBM in dem Schlüsselstromgenerator SSG statt.

Beiden Optionen inhärent ist, dass die sequentielle Verwendung der Zählerwerte protokolliert wird und durch die Protokollierung erkannt wird, ob der Blockchiffre-Schlüssel BCS mit demselben Zählerwert fehlerhaft, so z.B. mehrfach oder sequentiell-mehrfach, verwendet worden ist. Dieses Erkennen der fehlerhaften Verwendung in der Betriebsart "Verschlüsselung" des Schlüsselstromgenerators SSG erfolgt durch das entsprechende funktionale Zusammenwirken und die entsprechende Ausbildung des Protokollspeicher-Moduls PSM und des Prüf-Erkennung-Moduls PEM in dem Schlüsselstrombildung-Modul SSBM, wobei das Erkennen als solches und die sich daraus ergebende Konsequenz für die Schlüsselstrombildung in dem Prüf-Erkennung-Modul PEM passiert.

So wird bei einer fehlerhaften Verwendung entweder der Schlüsselstrom SST_{VS} nicht ausgegeben oder stattdessen eine Fehlermeldung FM. Hat es hingegen eine fehlerlose Verwendung gegeben, so wird der Schlüsselstrom SST_{VS} für die Verschlüsselung der Daten DT, NDT ausgegeben. Dieselbe Konsequenz bezüglich der Schlüsselstrombildung trifft auch auf den im vorvorstehenden Absatz definierten Vergleich zwischen dem weiteren Initialisierungsvektor IV und dem gespeicherten Zählerstand hinsichtlich der zu erfüllenden Initialisierungsvektor-Zählerstand-Bedingung i₃≥i₂=i₁+n zu. D.h. wenn die besagte Bedingung erfüllt ist, wird der Schlüsselstrom SST_{VS} für die Datenverschlüsselung oder, wenn die besagte Bedingung nicht erfüllt ist, die Fehlermeldung FM ausgegeben.

Mit der Fehlermeldung FM wird in vorteilhafter Weise ein Fehlerzustand des Schlüsselstromgenerators SSG in der in der Betriebsart "Verschlüsselung" angezeigt. Alternativ oder zusätzlich kann der Fehlerzustand auch gesetzt werden, z.B. in Form eines Fehlerbit am oder als Ausgang.

Weiterhin ist es möglich, dass mit der Fehlermeldung FM in der Betriebsart "Verschlüsselung" ein ungültiger Schlüsselstrom SST_{VS}' ausgegeben wird. Dieser ungültige Schlüsselstrom SST_{VS}' wird bevorzugt entweder aus einem zufällig gewählten Blockchiffre-Schlüssel BCS oder aus einem modifizierten, aus dem Blockchiffre-Schlüssel BCS mittels einer beliebigen Funktion abgeleiteten Blockchiffre-Schlüssel BCS' erzeugt.

Bei der fehlerlosen Verwendung wird zusätzlich zum ausgegebenen Schlüsselstrom SST_{VS} für die Verschlüsselung der Daten DT, NDT noch ein Prüfcode PRC_{GH} generiert, der für die Betriebsart "Verschlüsselung" an ein generatorspezifisches, beispielsweise im Schlüsselstromgenerator erzeugtes, Geheimnis GH gebunden ist. Das Geheimnis wird in dem Geheimnis-Modul GHM des Schlüsselstrombildung-Moduls SSBM in dem Schlüsselstromgenerator SSG entweder erzeugt oder in den Schlüsselstromgenerator von außen eingebracht und dann in dem Geheimnis-Modul abgelegt. Da das Geheimnis für einige Ausführungsformen, z.B. bei einem symmetrischen "Message Authentication Code <MAC>", in beiden Geheimnis-Modulen (für die Betriebsart "Verschlüsselung" / für die Betriebsart "Entschlüsselung") gleich sein muss, wird es bevorzugt von außen eingebracht und dann in dem Geheimnis-Modul GHM abgelegt.

Das Geheimnis wird in der Betriebsart "Verschlüsselung" benötigt, um den Prüfcode zu erzeugen. Weiter unten in der Betriebsart "Entschlüsselung" wird dann beschrieben, wie das Geheimnis GH benutzt wird, um den generierten Prüfcode PRC_{GH} zu validieren. Das Geheimnis kann z.B. über eine Ableitungsfunktion aus dem Blockchiffre-Schlüssel BCS erzeugt werden. Im einfachsten Fall wird das Geheimnis jedoch identisch dem Blockchiffre-Schlüssel BCS gewählt.

Der Prüfcode PRC_{GH} kann z.B. dazu benutzt werden, um den Initialisierungsvektor-basierten Zählerwert zu schützen. Außerdem ist er zur Authentisierung des Initialisierungsvektors vorzugsweise in Form einer asymmetrischen Signatur oder als ein symmetrischer "Message Authentication Code <MAC>" auasgebildet.

Zur Erhöhung der Sicherheit, insbesondere gegenüber Replay-Angriffen, können neben dem Initialisierungsvektor weitere Hilfsdaten, z.B. Generationszähler und/oder ein Nonce, ein digitaler Fingerabdruck von dem Blockchiffre-Schlüssel, in den Prüfcode bzw. den "Message Authentication Code <MAC>" oder die asymmetrische Signatur eingehen.

Dann und nur dann, wenn es in der Betriebsart "Verschlüsselung" zur Ausgabe des Schlüsselstrom SST_{VS} kommt, mit dem die Daten DT, NDT zu dem Chiffrat CHF verschlüsselt werden, wird der Prüfcode PRC_{GH} genriert, der in der Betriebsart "Entschlüsselung" für die Generierung des Schlüsselstrom SST_{ES} zur Entschlüsselung der Daten DT, NDT in dem Chiffrat CHF maßgebend ist.

Für diese Entschlüsselung der Daten DT, NDT in dem Chiffrat CHF wird in dem Schlüsselstromgenerator SSG der in der FIGUR dargestellten Schlüsselstromgenerator-Anordnung, der sich in der Betriebsart "Entschlüsselung" befindet, der Schlüsselstrom SST_{ES} aufgrund des zweiten Steuerdatensatzes SDS2 erzeugt. Gemäß der Darstellung in der FIGUR wird der zweite Steuerdatensatz SDS2 von dem Schlüsselstromgenerator SSG in der Betriebsart "Verschlüsselung" an den Schlüsselstromgenerator SSG in der Betriebsart "Entschlüsselung" übergeben. Es ist alternativ aber auch möglich, dass dieser zweite Steuerdatensatz SDS2 automatisch gegeben ist oder vorliegt. Der zweite Steuerdatensatz SDS2 wird repräsentiert durch den von dem Schlüsselstromgenerator SSG in der Betriebsart "Verschlüsselung" generierten Prüfcode PRC_{GH}. Zu dem Prüfcode PRC_{GH} gehören dabei auch die in der Betriebsart "Verschlüsselung" bei den in Bezug auf den ersten Steuerdatensatz SDS1 erfolgten Aufrufen i₁, i₃,... des Schlüsselstromgenerators SSG gegebenen Initialisierungsvektoren IV mit IV=i₁, IV=i₃, .... Die Schlüsselstrombildung des Schlüsselstroms SST_{ES} erfolgt wieder für die einzelnen Betriebszählzyklen i₁, i₃, ... aus der Verschlüsselung des jeweils in dem Prüfcode PRC_{GH} mit den zu den Initialisierungsvektoren IV mit IV=i₁, IV=i₃, ... gegebenen Zählerwertes mit dem Blockchiffre-Schlüssel BCS.

Um jetzt auch in dem Schlüsselstromgenerator SSG in der Betriebsart "Entschlüsselung" die fehlerhafte, so z.B. die mehrfache oder sequentiell-mehrfache, Verwendung der Blockchiffre-Schlüssel BCS und Zählerwerte erkennen zu können, wird der generierte Prüfcode PRC_{GH}, der den zweiten Steuerdatensatz SDS2 repräsentiert, im Zuge einer auf der Basis des Geheimnisses GH, das wieder in dem Geheimnis-Modul GHM des Schlüsselstrombildung-Moduls SSBM in dem Schlüsselstromgenerator SSG erzeugt und abgelegt ist, einer Validitätsprüfung unterzogen. Bei dieser Validitätsprüfung wird ermittelt, ob der generierte, den zweiten Steuerdatensatz SDS2 repräsentierende Prüfcode PRC_{GH} valide ist.

Diese Überprüfung, ob der Prüfcode PRC_{GH} valide ist, erfolgt in der Betriebsart "Entschlüsselung" des Schlüsselstromgenerators SSG durch das entsprechende funktionale Zusammenwirken und die entsprechende Ausbildung des Geheimnis-Moduls GHM und des Prüf-Erkennung-Moduls PEM in dem Schlüsselstrombildung-Modul SSBM, wobei die Validitätsprüfung als solche und die sich daraus ergebende Konsequenz für die Schlüsselstrombildung in dem Prüf-Erkennung-Modul PEM passiert.

So wird, wenn die Prüfcode-Validitätsprüfung negativ ausfällt, der Prüfcode PRC_{GH} also inkorrekt ist, entweder der Schlüsselstrom SST_{ES} nicht ausgegeben oder stattdessen eine weitere Fehlermeldung FM'. Fällt hingegen die Prüfcode-Validitätsprüfung positiv aus, was gleichbedeutend damit ist, dass der Prüfcode PRC_{GH} korrekt ist, so wird der Schlüsselstrom SST_{ES} für die Entschlüsselung des Chiffrats CHF ausgegeben.

Mit der weiteren Fehlermeldung FM' wird in vorteilhafter Weise wieder ein Fehlerzustand des Schlüsselstromgenerators SSG in der Betriebsart "Entschlüsselung" angezeigt. Alternativ oder zusätzlich kann der Fehlerzustand auch gesetzt werden, z.B. in Form eines Fehlerbit am oder als Ausgang. Mit der weiteren Fehlermeldung FM' lässt sich in der Betriebsart "Entschlüsselung" in vorteilhafter Weise die Ausgabe des Schlüsselstroms SST_{ES} zur Entschlüsselung des Chiffrats CHF verhindern.

Das funktionale Zusammenwirken und die entsprechende Ausbildung des Geheimnis-Moduls GHM und des Prüf-Erkennung-Moduls PEM in dem Schlüsselstrombildung-Modul SSBM ermöglichen eine bevorzugte Prüfcode-Validitätprüfung derart, dass in der Betriebsart "Entschlüsselung" auf der Basis des Geheimnisses GH ein weiterer Prüfcode PRC_{GH}' erzeugt wird und dieser weitere Prüfcode PRC_{GH}' mit dem in der Betriebsart "Verschlüsselung" generierten Prüfcode PRC_{GH} auf Übereinstimmung verglichen wird. Fehlende Übereinstimmung bedeutet dabei negative Validitätsprüfung, während festgestellte Übereinstimmung positive Validitätsprüfung bedeutet.

Die in der FIGUR dargestellte Schlüsselstromgenerator-Anordnung mit den beiden Schlüsselstromgeneratoren SSG ist bezüglich der Betriebsartwahl, Wahl der Betriebsart "Verschlüsselung" oder Wahl der Betriebsart "Entschlüsselung", vorzugsweise derart gestaltet, dass die Wahl der Betriebsart entweder dynamisch explizit, z.B. mittels Konfigurations-PIN oder Konfigurationskommando, oder statisch durch hardwaremäßiges Festlegen des Schlüsselstromgenerators konfiguriert wird.

Zusätzlich oder alternativ ist es aber auch möglich, dass die Wahl der Betriebsart "Verschlüsselung" automatisch durch den ersten Steuerdatensatz SDS1 und die Wahl der Betriebsart "Entschlüsselung" automatisch durch den zweiten Steuerdatensatz im Sinne einer Konfiguration bestimmt wird.

Darüber hinaus kann in beiden Fällen von Vorteil sein, wenn die Wahl der Betriebsart "Verschlüsselung" und die Wahl der Betriebsart "Entschlüsselung" des Schlüsselstromgenerators SSG irreversibel ist, wenn sie einmal getroffen worden ist.

## Patentansprüche

1. Verfahren zum Betreiben von im Zähler-Modus betriebenen Schlüsselstromgeneratoren (SSG) zur sicheren Datenübertragung, bei dem für die Übertragung von Daten (DT), insbesondere Nutzdaten (NDT), die Daten (DT, NDT) mit einem von einem Schlüsselstromgenerator (SSG) aufgrund eines ersten Steuerdatensatzes (SDS1) erzeugten Schlüsselstrom (SST_{VS}) zu einem Chiffrat (CHF) verschlüsselt werden und die Daten (DT, NDT) in dem Chiffrat (CHF) mit einem von dem Schlüsselstromgenerator (SSG) aufgrund eines zweiten Steuerdatensatzes (SDS2) erzeugten Schlüsselstrom (SST_{ES}) entschlüsselt werden, wobei der Schlüsselstrom (SST_{VS}, SST_{ES}) aus der Verschlüsselung eines fortlaufend, in Form von steuerdatensatzbezogenen Aufrufen (i₁, i₃,...) des Schlüsselstromgenerators (SSG) ermittelten, initial durch einen in dem Steuerdatensatz (SDS1, SDS2) enthaltenen Initialisierungsvektor (IV) mit IV=i₁ gegebenen, in einem begrenzten Zähler-Wertebereich, insbesondere in der Größenordnung von größer als 2³², liegenden Zählerwertes mit einem Blockchiffre-Schlüssel (BCS) gebildet wird,
**dadurch gekennzeichnet, dass**
**a**) in einer Betriebsart "Verschlüsselung"
**a1**) die sequentielle Verwendung der Zählerwerte protokolliert wird und durch die Protokollierung erkannt wird, ob der Blockchiffre-Schlüssel (BCS) mit demselben Zählerwert fehlerhaft, insbesondere mehrfach oder sequentiell-mehrfach, verwendet worden ist, wobei
**a11**) bei der fehlerhaften Verwendung eine Fehlermeldung (FM) oder kein Schlüsselstrom (SST_{VS}) ausgegeben wird, oder
**a12**) bei fehlerloser Verwendung der Schlüsselstrom (SST_{VS}) für die Verschlüsselung der Daten (DT, NDT) ausgegeben wird sowie ein Prüfcode (PRC_{GH}) generiert wird, der für die Betriebsart "Verschlüsselung" an ein generatorspezifisches, insbesondere im Schlüsselstromgenerator erzeugtes oder in diesen von außen eingebrachtes, Geheimnis (GH) gebunden ist, und
**b**) in einer Betriebsart "Entschlüsselung"
**b1**) die fehlerhafte, insbesondere die mehrfache oder sequentiell-mehrfache, Verwendung der Blockchiffre-Schlüssel (BCS) und Zählerwerte aufgrund des generierten Prüfcodes (PRC_{GH}) als den zweiten Steuerdatensatz (SDS2) im Zuge einer auf der Basis des Geheimnisses (GH) durchgeführten Validitätsprüfung des Prüfcodes (PRC_{GH}) erkannt wird und damit, ob der generierte, den zweiten Steuerdatensatz (SDS2) repräsentierende Prüfcode (PRC_{GH}) valide ist, wobei
**b11**) eine weitere Fehlermeldung (FM') oder kein Schlüsselstrom (SST_{ES}) ausgegeben wird, wenn die Prüfcode-Validitätsprüfung negativ ausfällt, der Prüfcode (PRC_{GH}) also inkorrekt ist, oder
**b12**) der Schlüsselstrom (SST_{ES}) zur Entschlüsselung des Chiffrats (CHF) ausgebeben wird, wenn die Prüfcode-Validitätsprüfung positiv ausfällt, der Prüfcode (PRC_{GH}) also korrekt ist.

2. Verfahren nach Anspruch 1, **dadurch gekennzeichnet, dass**
die Validität des Prüfcodes (PRC_{GH}) derart geprüft wird, dass in der Betriebsart "Entschlüsselung" auf der Basis des Geheimnisses (GH) ein weiterer Prüfcode (PRC_{GH}') erzeugt wird und dieser weitere Prüfcode (PRC_{GH}) mit dem in der Betriebsart "Verschlüsselung" generierten Prüfcode (PRC_{GH}) auf Übereinstimmung verglichen wird.

3. Verfahren nach Anspruch 1, **dadurch gekennzeichnet, dass**
der Prüfcode (PRC_{GH}) benutzt wird, um den Initialisierungsvektor-basierten Zählerwert zu schützen.

4. Verfahren nach Anspruch 1 oder 3, **dadurch gekennzeichnet, dass**
der Prüfcode (PRC_{GH}) zur Authentisierung des Initialisierungsvektors (IV) eine asymmetrische Signatur oder ein symmetrischer "Message Authentication Code <MAC>" ist.

5. Verfahren nach einem der Ansprüche 1, 3 oder 4, **dadurch gekennzeichnet, dass**
in der Betriebsart "Verschlüsselung"
- beim ersten steuerdatensatzbezogenen Aufruf (i₁) des Schlüsselstromgenerators (SSG) der Initialisierungsvektor (IV) mit IV=i₁ als den ersten Steuerdatensatz (SDS1) gegeben ist,
- bei der sich daran anschließenden Schlüsselstromgenerierung (i₂) "n" Zählerwerte aus dem Zähler-Wertebereich bis zu einem Zählerstand i₂=i₁+n verbraucht werden,
- zur Protokollierung der Zählerstand i₂=i₁+n gespeichert wird,
- beim nachfolgenden zweiten steuerdatensatzbezogenen Aufruf (i₃) des Schlüsselstromgenerators (SSG) einen weiteren Initialisierungsvektor (IV) mit i₃≥i₂=i₁+n als weiterem ersten Steuerdatensatz (SDS1) gewählt wird.

6. Verfahren nach einem der Ansprüche 1, 3 oder 4, **dadurch gekennzeichnet, dass**
in der Betriebsart "Verschlüsselung"
- beim ersten steuerdatensatzbezogenen Aufruf (i₁) des Schlüsselstromgenerators (SSG) der Initialisierungsvektor (IV) mit IV=i₁ als den ersten Steuerdatensatz (SDS1) gegeben ist,
- bei der sich daran anschließenden Schlüsselstromgenerierung (i₂) "n" Zählerwerte aus dem Zähler-Wertebereich bis zu einem Zählerstand i₂=i₁+n verbraucht werden,
- zur Protokollierung der Zählerstand i₂=i₁+n gespeichert wird,
- beim nachfolgenden zweiten steuerdatensatzbezogenen Aufruf (i₃) des Schlüsselstromgenerators (SSG) ein weiterer Initialisierungsvektor (IV) mit IV=i₃ als weiterem ersten Steuerdatensatz (SDS1) eingegeben wird,
- der beim zweiten Aufruf (i₃) des Schlüsselstromgenerators (SSG) eingegebene weitere Initialisierungsvektor (IV) mit dem gespeicherten Zählerstand hinsichtlich einer zu erfüllenden Initialisierungsvektor-Zählerstand-Bedingung i₃≥i₂=i₁+n verglichen wird und dabei entweder, wenn die besagte Bedingung erfüllt ist, der Schlüsselstrom (SST_{VS}) für die Datenverschlüsselung oder, wenn die besagte Bedingung nicht erfüllt ist, die Fehlermeldung (FM) ausgegeben wird.

7. Verfahren nach einem der Ansprüche 1, 3 oder 4, **dadurch gekennzeichnet, dass**
mit der Fehlermeldung (FM, FM') ein Fehlerzustand angezeigt und/oder gesetzt wird, z.B. ein Fehlerbit als Ausgang.

8. Verfahren nach einem der Ansprüche 1 bis 4, **dadurch gekennzeichnet, dass**
mit der weiteren Fehlermeldung (FM') in der Betriebsart "Entschlüsselung" die Ausgabe des Schlüsselstroms (SST_{ES}) zur Entschlüsselung des Chiffrats (CHF) verhindert wird.

9. Verfahren nach einem der Ansprüche 1, 3, 4, 5 oder 6, **dadurch gekennzeichnet, dass**
mit der Fehlermeldung (FM) in der Betriebsart "Verschlüsselung" ein ungültiger Schlüsselstrom (SST_{VS}') ausgegeben wird.

10. Verfahren nach Anspruch 9, **dadurch gekennzeichnet, dass**
der ungültige Schlüsselstrom (SST_{VS}') aus einem zufällig gewählten Blockchiffre-Schlüssel (BCS) oder aus einem modifizierten, aus dem Blockchiffre-Schlüssel (BCS) mittels einer beliebigen Funktion abgeleiteten Blockchiffre-Schlüssel (BCS') erzeugt wird.

11. Verfahren nach einem der Ansprüche 1 bis 10, **dadurch gekennzeichnet, dass**
der Initialisierungsvektor (IV) von dem Schlüsselstromgenerator (SSG) in der Betriebsart "Verschlüsselung" automatisch vorgegeben oder dem Schlüsselstromgenerator (SSG) von außen zugeführt wird.

12. Verfahren nach einem der Ansprüche 1 bis 11, **dadurch gekennzeichnet, dass**
die Wahl der Betriebsart "Verschlüsselung" und der Betriebsart "Entschlüsselung" des Schlüsselstromgenerators (SSG) entweder dynamisch explizit, z.B. mittels Konfigurations-PIN oder Konfigurationskommando, oder statisch durch hardwaremäßiges Festlegen des Schlüsselstromgenerators (SSG) konfiguriert wird.

13. Verfahren nach einem der Ansprüche 1 bis 11, **dadurch gekennzeichnet, dass**
die Wahl der Betriebsart "Verschlüsselung" des Schlüsselstromgenerators (SSG) automatisch durch den ersten Steuerdatensatz (SDS1) und die Wahl der Betriebsart "Entschlüsselung" des Schlüsselstromgenerators (SSG) automatisch durch den zweiten Steuerdatensatz (SDS2) konfiguriert wird.

14. Verfahren nach Anspruch 12 oder 13, **dadurch gekennzeichnet, dass**
die Wahl der Betriebsart "Verschlüsselung" und die Wahl der Betriebsart "Entschlüsselung" des Schlüsselstromgenerators (SSG), wenn einmal erfolgt, irreversibel ist.

15. Schlüsselstromgenerator (SSG) mit Zähler-Modus-Betrieb zur sicheren Datenübertragung,
**a**) bei dem für die Übertragung von Daten (DT), insbesondere Nutzdaten (NDT), die Daten (DT, NDT) mit einem in dem Schlüsselstromgenerator (SSG) aufgrund eines ersten Steuerdatensatzes (SDS1) erzeugten Schlüsselstrom (SST_{VS}) zu einem Chiffrat (CHF) verschlüsselt werden und die Daten (DT, NDT) in dem Chiffrat (CHF) mit einem von dem Schlüsselstromgenerator (SSG) aufgrund eines zweiten Steuerdatensatzes (SDS2) erzeugten Schlüsselstrom (SST_{ES}) entschlüsselt werden, und
**b**) mit einem Datensatz-Schnittstelle-Modul (DSSM), einem Blockchiffre-Modul (BCM) und einem Schlüsselstrombildung-Modul (SSBM), die miteinander verbunden sind und eine gemeinsame Funktionseinheit derart bilden, dass
der Schlüsselstrom (SST_{VS}, SST_{ES}) in dem Schlüsselstrombildung-Modul (SSBM) aus der Verschlüsselung eines fortlaufend, in Form von steuerdatensatzbezogenen Aufrufen (i₁, i₃,...) des Schlüsselstromgenerators (SSG) ermittelten, initial durch einen in dem Steuerdatensatz (SDS1, SDS2) enthaltenen Initialisierungsvektor (IV) mit IV=i₁ gegebenen, in einem begrenzten Zähler-Wertebereich, insbesondere in der Größenordnung von größer als 2³², liegenden Zählerwertes mit einem Blockchiffre-Schlüssel (BCS) gebildet wird,
**dadurch gekennzeichnet, dass**
**c**) das Schlüsselstrombildung-Modul (SSBM) ein Protokollspeicher-Modul (PSM), ein Geheimnis-Modul (GHM) und ein Prüf-Erkennung-Modul (PEM) enthält, wobei
**c1**) in einer Betriebsart "Verschlüsselung" das Protokollspeicher-Modul (PSM), das Geheimnis-Modul (GHM) und das Prüf-Erkennung-Modul (PEM) in dem Schlüsselstrombildung-Modul (SSBM) im Zuge der von dem Schlüsselstrombildung-Modul (SSBM) gebildeten Funktionseinheit derart ausgebildet sind und zusammenwirken, dass
**c11**) die sequentielle Verwendung der Zählerwerte protokolliert wird und durch die Protokollierung erkannt wird, ob der Blockchiffre-Schlüssel (BCS) mit demselben Zählerwert fehlerhaft, insbesondere mehrfach oder sequentiell-mehrfach, verwendet worden ist, wobei
**c111**) bei der fehlerhaften Verwendung eine Fehlermeldung (FM) oder kein Schlüsselstrom (SST_{VS}) ausgegeben wird, oder
**c112**) bei fehlerloser Verwendung der Schlüsselstrom (SST_{VS}) für die Verschlüsselung der Daten (DT, NDT) ausgegeben wird sowie ein Prüfcode (PRC_{GH}) generiert wird, der für die Betriebsart "Verschlüsselung" an ein generatorspezifisches, insbesondere im Schlüsselstromgenerator erzeugtes oder in diesen von außen eingebrachtes, Geheimnis (GH) gebunden ist, und
**c2**) in einer Betriebsart "Entschlüsselung" das Geheimnis-Modul (GHM) und das Prüf-Erkennung-Modul (PEM) in dem Schlüsselstrombildung-Modul (SSBM) im Zuge der von dem Schlüsselstrombildung-Modul (SSBM) gebildeten Funktionseinheit derart ausgebildet sind und zusammenwirken, dass
**c21**) die fehlerhafte, insbesondere die mehrfache oder sequentiell-mehrfache, Verwendung der Blockchiffre-Schlüssel (BCS) und Zählerwerte aufgrund des generierten Prüfcodes (PRC_{GH}) als den zweiten Steuerdatensatz (SDS2) im Zuge einer auf der Basis des Geheimnisses (GH) durchgeführten Validitätsprüfung des Prüfcodes (PRC_{GH}) erkannt wird und damit, ob der generierte, den zweiten Steuerdatensatz (SDS2) repräsentierende Prüfcode (PRC_{GH}) valide ist, wobei
**c211**) eine weitere Fehlermeldung (FM') oder kein Schlüsselstrom (SST_{ES}) ausgegeben wird, wenn die Prüfcode-Validitätsprüfung negativ ausfällt, der Prüfcode (PRC_{GH}) also inkorrekt ist, oder
**c212**) der Schlüsselstrom (SST_{ES}) zur Entschlüsselung des Chiffrats (CHF) ausgebeben wird, wenn die Prüfcode-Validitätsprüfung positiv ausfällt, der Prüfcode (PRC_{GH}) also korrekt ist.

16. Schlüsselstromgenerator (SSG) nach Anspruch 15,
**dadurch gekennzeichnet, dass**
das Protokollspeicher-Modul (PSM), das Geheimnis-Modul (GHM) und das Prüf-Erkennung-Modul (PEM) in dem Schlüsselstrombildung-Modul (SSBM) im Zuge der von dem Schlüsselstrombildung-Modul (SSBM) gebildeten Funktionseinheit derart ausgebildet sind und zusammenwirken, dass
das kennzeichnende Merkmal in einem der Ansprüche 2, 5, 6, 7, 8, 9 oder 10 ausgeführt wird.

17. Schlüsselstromgenerator (SSG) nach Anspruch 15 oder 16, **gekennzeichnet durch**
das kennzeichnende Merkmal in einem der Ansprüche 3, 4, 11, 12, 13 oder 14.

18. Computer-Programm-Produkt zur Schlüsselstromerzeugung mit einem nicht-flüchtigen, lesbaren Speicher, in dem prozessorlesbare Steuerprogrammbefehle eines die Schlüsselstromerzeugung durchführenden Programm-Moduls gespeichert sind, und einem mit dem Speicher verbundenen Prozessor, der die Steuerprogrammbefehle des Programm-Moduls zur Schlüsselstromerzeugung ausführt, **dadurch gekennzeichnet, dass** das Verfahren nach einem der Ansprüche 1 bis 14 ausgeführt wird.
